# EUROPÄISCHE PATENTANMELDUNG

(11) **EP 4 484 209 A1**
(43) Veröffentlichungstag der Anmeldung: **01.01.2025**
(21) Anmeldenummer: 24183757.4
(22) Anmeldetag: 21.06.2024
(51) Int. Cl.: B60L 53/16, B60L 53/18, B60L 53/30

(54) **ANSCHLUSSVORRICHTUNG FÜR ELEKTROFAHRZEUGE**

(30) Priorität: 26.06.2023 DE 202023103552 U
(71) Anmelder: Krapht GmbH, 71642 Ludwigsburg (DE)
(72) Erfinder: Andreas, DIETZLER, 53498 Bad Breisig (DE); Philipp Marc, ROSCHATT, 71642 Ludwigsburg (DE)
(74) Vertreter: Spachmann, Holger

(57) **Zusammenfassung**

Die Erfindung betrifft eine Anschlussvorrichtung (10) für Elektrofahrzeuge oder Hybridfahrzeuge, umfassend ein Gehäuse (12), insbesondere zumindest ein Ladekabel (14) und/oder insbesondere zumindest eine Ladebuchse (16).

Es wird vorgeschlagen, dass das Ladekabel (14) und/oder die Ladebuchse (16) in einer Lagerposition (18) derart in dem Gehäuse (12) angeordnet sind bzw. anordenbar sind, dass das Ladekabel (14) und/oder die Ladebuchse (16) von außerhalb des Gehäuses (12) nicht sichtbar sind.

## Beschreibung

Die Erfindung betrifft eine Anschlussvorrichtung für Elektrofahrzeuge oder Hybridfahrzeuge.

### STAND DER TECHNIK

Aus dem Stand der Technik sind Anschlussvorrichtungen bekannt, die zum Aufladen von Elektrofahrzeugen oder Hybridfahrzeugen dienen. Bei den Anschlussvorrichtungen kann es sich beispielsweise um eine Ladesäule, eine Wallbox, einen Ladepunkt, einen Chargepoint, einen AC-Lader, einen Heimlader oder Ähnliches handeln. An die Anschlussvorrichtung kann ein Elektrofahrzeug oder ein Hybridfahrzeug für einen Ladevorgang angeschlossen werden.

Das Laden von Elektrofahrzeugen wird beispielsweise in der Norm IEC61851-1 beschrieben, wobei drei Ladeanschlussmöglichkeiten A, B, C erläutert werden. Im Falle der Anschlussmöglichkeiten A und B wird das Fahrzeug durch ein externes Ladekabel mit der Ladevorrichtung verbunden. Dazu ist an der Ladevorrichtung eine Ladebuchse Typ 2 als elektrische Aufnahme vorhanden, welche beispielsweise in der Norm IEC/EN62196 geregelt ist. Bei der Anschlussmöglichkeit C wird das Fahrzeug durch ein fest an der Ladevorrichtung verbundenes Ladekabel inklusive Ladestecker Typ 2 verbunden.

Bei bekannten Anschlussvorrichtungen wird das Ladekabel bzw. die Ladebuchse außen an der Anschlussvorrichtung bzw. an der Ladevorrichtung befestigt. Da es sich bei den Ladekabeln, Steckern sowie Buchsen um standardisierte Bauteile handelt, welche insbesondere aufgrund der elektrischen Sicherheit aus Kunststoff hergestellt sind, wird das Erscheinungsbild der Anschlussvorrichtung dadurch stark beeinträchtigt. Derartige Bauteile aus Kunststoff beeinflussen insbesondere das ästhetische Erscheinungsbild der Anschlussvorrichtung.

So zeigt die DE 10 2022 117 711 A1 eine Ladestation zum Aufladen für Elektroautos. Zwischen einer Rückseite und einer Sichtseite ist ein Lagerbereich vorgesehen, um welchen ein Ladekabel gewickelt werden kann. An der Sichtseite können unterschiedliche Dekorelemente angeordnet werden, die in einem Halterahmen fixiert werden können. Der Halterahmen kann mit dem Gehäuse der Sichtseite verklebt oder anderweitig befestigt werden. Dadurch kann das Dekorelement beispielsweise zu Reinigungszwecken oder auch zur Umsetzung eines andersartigen Erscheinungsbildes ausgetauscht werden.

Derartige Ladestationen können im Innenbereich sowie im Außenbereich installiert werden. Das Ladekabel inklusive Ladestecker, ebenso wie vorhandene Buchsen sind dabei nicht vor Wettereinflüssen geschützt. Insbesondere bei Starkregen, oder auch durch Staub, kann es so zu Beeinträchtigungen in der Funktionalität kommen. Des Weiteren wird das optische Erscheinungsbild durch derart verschmutzte Elemente beeinträchtigt. Ebenso ergeben sich Nachteile bei der Verwendung von verschmutzten Komponenten, wobei insbesondere die Handhabung eines nassen oder staubigen Ladesteckers oder Ladekabel als nachteilig empfunden wird. Da ein Starten eines Ladevorgangs händisch durchgeführt werden muss, kommt der Benutzer mit all diesen Elementen in Kontakt, wodurch zum einen der Benutzer selbst, und zum anderen das Fahrzeug sowie auch die Aufhängung für das Kabel den Verschmutzungen ausgesetzt sind.

Eine Möglichkeit, die Ladestecker hinter beweglichen Elementen anzuordnen, ist aus dem Stand der Technik bekannt. So ist in der CN 214564744 U eine Ladestation gezeigt, in der mehrere Ladestecker angeordnet sind. Die insgesamt sechs Ladestecker sind hinter einzelnen Abdeckelementen angeordnet, wodurch die Ladestecker optisch verdeckt werden. Der Gesamteindruck der Ladestation wird hier jedoch weiterhin durch den üblichen Eindruck einer Ladestation geprägt, wodurch sich die Ladestation ästhetisch nicht in die Umgebung einfügt.

Aus dem Stand der Technik sind daher weiterhin Möglichkeiten bekannt, eine Ladestation an die Umgebung anzupassen. Dabei wird ein Versenken der Ladestation im Untergrund vorgeschlagen.

In der WO 2019/215423 A1 und US 11,479,135 B2 werden Ladestationen offenbart, die im Boden versenkt werden können, wenn diese nicht genutzt werden, wodurch der optische Eindruck verbessert werden kann.

Die DE 10 2022 104 722 A1 zeigt eine Ladeeinrichtung, die auf einer Bodenfläche installiert und derart konfiguriert ist, eine in einem Fahrzeug montierte Energiespeichervorrichtung aufzuladen. Dabei sind mehrere Ladestationen umfasst, jeweils aufweisend eine bewegliche Einheit. Die bewegliche Einheit kann von dem Bodenniveau nach oben angehoben werden. Dadurch kann eine Beladung stattfinden. Der optische Eindruck kann daher auch dadurch verbessert werden, dass die Ladestation im Boden versenkt wird. Des Weiteren kann über einen Aktuator ein automatisiertes Ein- und Ausfahren der beweglichen Einheit gesteuert werden.

Somit zeigt der Stand der Technik zum einen die Möglichkeit, eine Ladestation optisch auszugestalten, wobei Dekorelemente eingesetzt werden können.

Nachteilig deckt das Dekorelement jedoch nur den Bereich ab, um welchen das eigentliche Ladekabel herumgewickelt werden kann. Nachteilig ist es daher nicht möglich, mit dem Dekorelement den optischen Eindruck der Ladestation derart umzugestalten, dass die Ladestation nicht als solche wahrgenommen wird.

In einer anderen bekannten Ausführung wird die Ladestation aus dem Boden herausgefahren, um von einem Kunden genutzt werden zu können. Wird die Ladestation nicht genutzt, kann diese im Boden versenkt werden. Nachteilig erfordert eine derartige Ausgestaltung zum einen ein Antriebselement und zum anderen eine Mechanik, welche Wartungsaufwändig und kostenintensiv sein können. Durch das Verfahren der Anschlusskable kann es weiterhin zu Beschädigungen kommen. Weiterhin nachteilig erfordert das Ein- und Ausfahren eine gewisse Zeitspanne, was störend wahrgenommen werden kann.

Aufgabe der vorliegenden Erfindung ist es, eine Anschlussvorrichtung bzw. Ladestation vorzuschlagen, welche die genannten Nachteile überwindet.

Diese Aufgabe wird durch eine Anschlussvorrichtung bzw. Ladestation nach dem unabhängigen Anspruch gelöst. Vorteilhafte Ausbildungen der Erfindung sind Gegenstand der Unteransprüche.

### OFFENBARUNG DER ERFINDUNG

Erfindungsgemäß wird eine Anschlussvorrichtung für Elektrofahrzeuge oder Hybridfahrzeuge vorgeschlagen, umfassend ein Gehäuse, und insbesondere zumindest ein Ladekabel und/oder insbesondere zumindest eine Ladebuchse.

Es wird vorgeschlagen, dass das Ladekabel und/oder die Ladebuchse in einer Lagerposition derart in dem Gehäuse angeordnet sind bzw. anordenbar sind, dass das Ladekabel und/oder die Ladebuchse von außerhalb des Gehäuses nicht sichtbar sind.

Vorteilhafterweise kann eine derartige Anschlussvorrichtung daher optisch aufgewertet werden, da ein zusammenhängendes Abdeckelement, das insbesondere als Dekorelement ausgebildet ist, einen optisch hochwertigen Gesamteindruck ermöglicht, der individuell an die Umgebung angepasst werden kann.

Vorteilhafterweise kann durch das Abdeckelement ein Ladekabel vor Diebstahl und Vandalismus geschützt in der Anschlussvorrichtung gelagert werden, insbesondere da ein Zugang zu dem Ladekabel inklusive Ladestecker oder Buchse für unbefugte Benutzer erschwert wird. Ebenso kann das Ladekabel sowie die Ladebuchse vor Verschmutzungen durch Wettereinflüsse sowie vor Nässe geschützt werden. Dies ermöglicht zum einen eine Langlebigkeit der Komponenten, und zum anderen eine komfortable Nutzung für einen Benutzer, der das Ladekabel mit der Buchse händisch verwendet.

In einer vorteilhaften Ausführungsform kann die Lagerposition einen Zustand darstellen, in welchem das Ladekabel und/oder die Ladebuchse nicht zum Laden eines Elektrofahrzeugs oder Hybridfahrzeugs genutzt wird. In der Lagerposition ist das Ladekabel mit dem Ladestecker sowie die Ladebuchse daher bevorzugt "versteckt" angeordnet.

Vorteilhafterweise kann die Anschlussvorrichtung insbesondere als Ladesäule, Wallbox, Ladepunkt, Chargepoint, AC-Lader, Heimlader oder Ähnliches ausgebildet sein.

Durch das Abdeckelement kann die Anschlussvorrichtung gestaltet werden, wodurch diese als Element wahrgenommen werden kann, das sich in die Umgebung einfügt. So kann von einer Person, die sich in der Umgebung der Anschlussvorrichtung aufhält, diese beispielsweise als Dekorsäule o. ä. wahrgenommen werden.

In einer vorteilhaften Ausführungsform kann das Gehäuse ein Abdeckelement aufweisen, hinter welchem das Ladekabel und/oder die Ladebuchse in der Lagerposition gelagert sind bzw. lagerbar sind. Das Gehäuse kann beispielsweise an einer Wand befestigt werden. Ebenso kann das Gehäuse auf einem Untergrund abgestellt beziehungsweise auf einem Untergrund befestigt werden. Das Gehäuse kann demnach in unterschiedlichen Höhen montiert werden, und beispielsweise auch einen Standfuß aufweisen.

Das Ladekabel, insbesondere mit Ladestecker bzw. Steckerelement, und/oder die Ladebuchse können bevorzugt komplett innerhalb des Gehäuses angeordnet werden. Dazu kann in dem Gehäuse beispielsweise zumindest eine Fixiereinrichtung bzw. eine Haltevorrichtung vorgesehen sein, wie beispielsweise ein Haken oder ein Ablageelement. Des Weiteren kann beispielsweise zumindest eine Vertiefung innerhalb des Gehäuses vorgesehen sein, in welche beispielsweise die Ladebuchse beziehungsweise der Ladestecker eingeführt, eingeklipst und/oder gelagert werden kann.

In einer vorteilhaften Ausführungsform kann das Abdeckelement verschwenkbar und/oder verschiebbar an dem Gehäuse gelagert sein. Dadurch kann beispielsweise durch seitliches Verschieben des Abdeckelements der Ladestecker und/oder die Ladebuchse freigelegt werden.

In einer vorteilhaften Ausführungsform kann das Abdeckelement parallel zu dem Gehäuse verschiebbar und/oder verschwenkbar sein. So kann das Abdeckelement beispielsweise nach rechts bzw. nach links und/oder nach oben bzw. nach unten geschoben werden, um das Innere des Gehäuses freizulegen. Bevorzugt ist das Abdeckelement dabei vertikal ausgerichtet und wird vertikal und/oder horizontal bezüglich des Gehäuses verschoben. Im Anschluss daran kann das Ladekabel und/oder die Ladebuchse herausgezogen werden, um ein Elektrofahrzeug oder Hybridfahrzeug zu laden.

In einer vorteilhaften Ausführungsform kann das Abdeckelement eine Seitenfläche des Gehäuses im Wesentlichen abdecken. Das Abdeckelement ist bevorzugt als flächiges Element, insbesondere als Scheibe ausgeformt, die beispielsweise die Form des Gehäuses aufweist. Als Form ist insbesondere die Form einer Seitenfläche des Gehäuses oder eine Grundform des Gehäuses zu verstehen.

In einer vorteilhaften Ausführungsform kann das Abdeckelement eine Seitenfläche des Gehäuses ausbilden. Demnach kann das Gehäuse an einer Seite offen ausgeführt sein, wobei das Abdeckelement zur Abdeckung der offenen Seite ausgeführt ist. Das Abdeckelement bildet bevorzugt eine Frontseite aus, die größer als zumindest zwei, insbesondere zumindest vier, weitere Seitenflächen des Gehäuses ausgebildet ist.

Das Abdeckelement kann beispielsweise durch Führungselemente bzw. Gelenkselemente an dem Gehäuse gelagert sein. Insbesondere kann das Abdeckelement an zumindest einem Schienenelement geführt sein, um verschoben bzw. verschwenkt zu werden. In einer weiteren Ausführung kann auch ein Aufklappen des Abdeckelement möglich sein, wenn beispielsweise zumindest ein Scharnierelement umfasst ist.

In einer vorteilhaften Ausführungsform kann das Abdeckelement als Dekorelement ausgebildet sein. So kann die Anschlussvorrichtung an die Umgebung angepasst werden.

Beispielsweise kann das Abdeckelement aus einem beliebigen Steinmaterial bestehen. Des Weiteren können unterschiedliche Holz- oder Kunststoffmaterialien eingesetzt werden. Ebenso ist eine Bespannung mit einem flexiblen Material möglich, wie beispielsweise einer Art Vlies -Material oder PVC-Material. Insbesondere kann das Abdeckelement eine Holzplatte oder eine Steinplatte aufweisen oder aus einer Holzplatte oder einer Steinplatte ausgebildet sein. Auf dem Abdeckelement können alternativ oder zusätzlich beliebige Aufschriften, Beschriftungen oder Kennzeichnungen angebracht oder eingebracht werden.

In einer vorteilhaften Ausführungsform kann das Abdeckelement als Keramik- oder Steinplatte, insbesondere Marmorplatte ausgebildet sein. Durch eine Ausführung des Abdeckelements als Keramik- oder Steinplatte, insbs. als Feinsteinzeug, Naturstein oder ähnliche mineralische Materialien kann eine besonders hochwertige Anschlussvorrichtung ausgebildet werden, die an Orte platziert werden können, die optisch aufgewertet und nicht negativ beeinträchtigt werden sollen. So kann die Anschlussvorrichtung als Kunst- oder Dekorationssäule oder ähnliches wahrgenommen werden, die sich insbesondere in eine Gebäudeumgebung harmonisch und optisch gefällig einfügen kann.

In einer vorteilhaften Ausführungsform können in dem Gehäuse zumindest zwei oder mehrere einzelne Fächer ausgeformt sein, wobei insbesondere in einem Fach das Ladekabel gelagert ist bzw. lagerbar ist. So können beispielsweise zumindest zwei Fächer nebeneinander angeordnet werden, welche vorgesehen sein, um Ladekabel für zwei Ladebuchsen separat abzulegen bzw. separat zu befestigen. Es ist ebenso denkbar, dass die Anschlussvorrichtung für mehr als zwei Ladebuchsen ausgebildet ist, beispielsweise auch mehr als zwei Fächer vorgesehen sein können. Beispielsweise können vier Fächer angeordnet sein, wobei jedes Fach dieselbe oder eine unterschiedliche Größe aufweisen. Des Weiteren kann eine beliebige Anzahl an Fächern vorgesehen sehen sein, die unterschiedlich ausgebildet sind. So kann beispielsweise nicht nur das Ladekabel für eine Ladebuchse dort platziert werden, sondern auch andere Elemente dort abgelegt werden. Wird beispielsweise die Anschlussvorrichtung privat genutzt, so kann diese nur durch befugte Personen geöffnet werden. Ein weiteres Fach kann daher vorteilhaft sein, um weitere Gegenstände darin zu lagern, die insbesondere während, nach oder vor einem Ladevorgang benötigt werden.

In einer vorteilhaften Ausführungsform kann das Abdeckelement über zumindest ein Schienenelement an dem Gehäuse verschieblich geführt gelagert sein. Das Schienenelement kann beispielsweise an dem Abdeckelement angeordnet sein, und mithilfe von zumindest einem Lagerelement an dem Gehäuse verschieblich geführt werden. Insbesondere sind für ein Schielenelement zumindest zwei Lagerelemente vorgesehen, um eine gewünschte Ausrichtung sowie Fixierung des Schienenelements an dem Gehäuse sicherzustellen. Insbesondere kann ein Schienenelement eine Parallelverschiebung des Abdeckelements bezüglich des Gehäuses ermöglichen. In einer weiteren Ausführungsform ist es denkbar, dass die Schienenelemente an dem Gehäuse angeordnet sind, während beispielsweise zumindest ein Lagerelement an dem Abdeckelement vorgesehen ist.

In einer vorteilhaften Ausführungsform können zumindest zwei parallele Schienenelemente vorgesehen sein, um das Abdeckelement parallel zu dem Gehäuse zu verschieben. So können separate Halteelemente für die unterschiedlichen Schienenelemente vorgesehen sein. Des Weiteren können die Schienenelemente derart ausgebildet sein, dass diese über zumindest zwei ineinander laufende Schienen funktionieren.

In einer vorteilhaften Ausführungsform kann das Abdeckelement über zumindest ein Zahnradelement und zumindest eine Zahnstange an dem Gehäuse vorzugsweise motorisch antreibbar gelagert sein. Insbesondere erfolgt ein Zahnradantrieb in Kombination mit zumindest einem Schienenelement. Alternativ ist der Einsatz eines Seilzugs, oder Ketten- oder Riemenantriebs, z.B. Keilriemen, eines Schneckantrieb oder einen vergleichbaren Linearantriebs, auch Hydraulik- oder Pneumatikantrieb denkbar.

So ist ein handbetätigbarer Antrieb des Abdeckelements denkbar. Es ist ebenso denkbar, dass ein motorischer Antrieb vorgesehen ist, der ein Verschieben des Abdeckelements ermöglicht. Der Antrieb kann beispielsweise elektrisch, hydraulisch oder pneumatisch erfolgen. Ebenso kann das Abdeckelement händisch bewegt werden. Der Antrieb kann vorzugsweise fernbedienbar aktivierbar sein, oder kann z.B. durch ein personalisierbaren Zugang, z.B. über einen Fingerabdrucksensor, RFID/NFC-Chip, QR-Code oder Magnet- bzw. Chipkarte aktivierbar sein. Alternativ oder zusätzlich ist eine Aktivierung über eine App eines mobilen Endgeräts wie Tablet, Handy oder ähnliches, auch über eine entsprechende fahrzeuginterne Anwendung, direkt über das Internet, beispielsweise über einen Remoteserver denkbar, wobei entsprechende Steuerbefehle entweder über das Internet, z.B. über den Remoteserver, aber auch unmittelbar und direkt, z.B. über Bluetooth, NFC, ZigBee oder WLAN, alternativ aber auch über Infrarot übermittelt werden können.

In einer vorteilhaften Ausführungsform kann zumindest ein Elektromotor vorgesehen sein, um das Abdeckelement relativ zu dem Gehäuse zu verschieben. Insbesondere ist der Elektromotor dazu ausgebildet, das Zahnrad anzutreiben, welches wiederum in die Zahnstange eingreift, um das Abdeckelement bezüglich des Gehäuses zu verschieben. Der Elektromotor sowie das Zahnrad sind bevorzugt an dem Gehäuse befestigt. Die Zahnstange kann insbesondere an dem Abdeckelement angeordnet sein. Durch das zumindest eine Zahnrad keine eine Kraftübertragung auf die zumindest eine Zahnstange erfolgen, wobei wiederum durch die zumindest eine Zahnstange eine Kraft in eine Bewegung umgewandelt werden kann.

In einer vorteilhaften Ausführungsform kann das Ladekabel über zumindest ein lösbares Halteelement in dem Gehäuse gehalten sein. Dafür können unterschiedliche Schnappverschlüsse, Haken oder auch andersartige lösbare Fixierungselemente eingesetzt werden. Insbesondere kann durch das Halteelement gewährleistet werden, dass das Ladekabel geordnet, und insbesondere in einer gewünschten Position, innerhalb des Gehäuses gelagert sowie gehalten werden kann. Dies ermöglicht insbesondere auch ein sicheres Schließen des Abdeckelements, da das Ladekabel nicht zwischen dem Gehäuse und dem Abdeckelement herausrutschen kann.

Beispielsweise kann zumindest ein Sensor vorgesehen sein, der eine Annäherung eines potentiellen Benutzers erfasst, ähnlich z.B. wie in einem Keyless-Go-System eines modernen KFZ. Dadurch kann ein Bewegen des Abdeckelements wie oben beschrieben ausgelöst werden. Des Weiteren kann der Benutzer durch Videoerkennung, wie insbesondere Gesichtserkennung und/oder Gestensteuerung, den Bewegungsmechanismus auslösen. Des Weiteren kann der Benutzer durch Betätigen eines Schalters oder Tasters den Bewegungsmechanismus auslösen. Daneben sind eine Aktivierung mitels Fingerabdrucksensor, mittels RFID/NFC-Chip, QR-Code, über ein Webinterface oder ähnliches denkbar.

In einer vorteilhaften Ausführungsform kann ein Näherungssensor vorgesehen sein, um ein Öffnen und/oder Schließen des Abdeckelements auszulösen. So kann das Abdeckelement beispielsweise automatisiert geschlossen bzw. geöffnet werden, wenn sich eine Person und/oder ein Fahrzeug entfernt bzw. nährt. Dies verbessert die Nutzfunktion der Anschlussvorrichtung, da direkt bei Ankunft an der Anschlussvorrichtung das Ladekabel entnommen und der Ladevorgang gestartet werden kann, ohne zunächst händisch das Abdeckelement beiseitezuschieben beziehungsweise zu entfernen.

Insbesondere kann über eine Applikation auf einem Smartphone oder im Fahrzeug die Anschlussvorrichtung angesteuert werden. Dabei kann ein gewünschter Vorgang ausgelöst werden, der beispielsweise das Verschieben oder Verschwenken des Abdeckelements um eine bestimmte Strecke auslöst, sodass ein gewünschter Teilbereich des Gehäuses freigegeben wird.

Die Anschlussvorrichtung ist insbesondere auch für eine Anschlussmöglichkeit C geeignet, wobei Fahrzeug durch ein fest an der Ladevorrichtung verbundenes Ladekabel inklusive Ladestecker Typ 2 verbunden wird.

Vorteilhafterweise kann das Abdeckelement um eine gewünschte Strecke verschoben bzw. verschwenkt werden, um lediglich einen Teilbereich des Gehäuses freizulegen. Insbesondere kann dabei beispielsweise lediglich eine Ladebuchse freigegeben werden. In einer weiteren Ausführung können insbesondere zwei Ladebuchsen freigegeben werden, wenn das Abdeckelement um eine gewünschte Strecke verschoben bzw. verschwenkt angeordnet ist. Des Weiteren kann beispielsweise das Ladekabel mit dem Ladestecker freigegeben werden, wenn das Abdeckelement verschwenkt bzw. verschoben wird. Dabei können unterschiedliche Verschiebungsrichtungen bzw. Verschwenkrichtungen unterschiedliche Bereiche des Gehäuses freigeben. Die unterschiedlichen Bereiche können beispielsweise durch Fächer in dem Gehäuse ausgebildet sein. In einer weiteren Ausführungsform ist es daher denkbar, dass Anschlagelemente vorgesehen sind, welche ein Verschieben des Abdeckelements um eine gewünschte Strecke ermöglichen, sodass ein gewünschter Bereich freigegeben wird.

### ZEICHNUNGEN

Weitere Vorteile ergeben sich aus der vorliegenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigt:
- Fig. 1: eine mögliche Ausführungsform einer Anschlussvorrichtung in einer Frontansicht;
- Fig. 2: eine weitere mögliche Ausführungsform einer Anschlussvorrichtung mit einem teilweise geöffneten Abdeckelement;
- Fig. 3: eine weitere mögliche Ausführungsform einer Anschlussvorrichtung mit einem teilweise geöffneten Abdeckelement;
- Fig. 4: eine weitere mögliche Ausführungsform einer Anschlussvorrichtung mit einem teilweise geöffneten Abdeckelement;
- Fig. 5: eine mögliche Ausführungsform einer Anschlussvorrichtung in einer isometrischen Darstellung;
- Fig. 6: die Ausführung nach Fig. 5 in unterschiedlichen Front- und Seitenansichten;
- Fig. 7: eine weitere mögliche Ausführungsform einer Anschlussvorrichtung mit einem teilweise geöffneten Abdeckelement;
- Fig. 8: die Ausführung nach Fig. 7 in unterschiedlichen Front- und Seitenansichten;
- Fig. 9: eine weitere mögliche Ausführungsform einer Anschlussvorrichtung ohne Abdeckelement;
- Fig. 10: eine weitere mögliche Ausführungsform einer Anschlussvorrichtung ohne Abdeckelement;
- Fig. 11: die Ausführung nach Fig. 7 oder 8 in unterschiedlichen Front- und Seitenansichten.

In den Figuren sind gleiche Merkmale mit denselben Bezugszeichen beziffert.

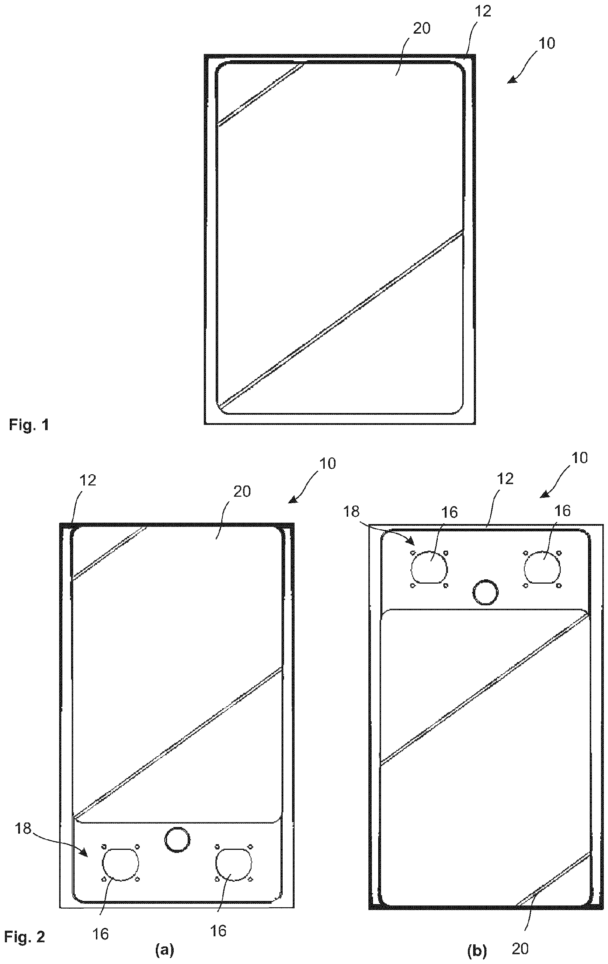

Fig. 1 zeigt eine mögliche Ausführungsform einer Anschlussvorrichtung 10 in einer Frontansicht. Die Anschlussvorrichtung 10 weist ein Gehäuse 12 sowie ein Abdeckelement 20 auf. Das Abdeckelement 20 sowie das Gehäuse 12 weisen in dieser Ausführungsform eine rechteckige Form auf. Dies ist lediglich beispielhaft, wobei die Anschlussvorrichtung 10 eine beliebige Geometrie sowie beliebige Abmessungen aufweisen kann. Insbesondere kann das Gehäuse beispielsweise auch elliptisch, kreisförmig oder andersartig geformt sein, wobei es vorteilhaft ist, wenn das Abdeckelement 20 an die Form des Gehäuses 12 angepasst ist.

Das Abdeckelement 20 kann als Dekorelement 22 dienen, wodurch die Anschlussvorrichtung 10 eine optisch ansprechende Form aufweisen kann. So kann das Abdeckelement 20 beispielsweise aus einer Marmorplatte, eine Holzplatte, aus Kunststoff oder auch aus einer Keramikplatte bestehen. Des Weiteren können Marmorelemente, Holzelemente, Keramikelemente, Kunststoffelemente oder andere Materialien als Dekorelemente 22 an dem Abdeckelement 20 angeordnet sein. SO können auch beliebige Muster oder Schriftzüge aufgebracht werden.

Fig. 2 zeigt weitere mögliche Ausführungsformen einer Anschlussvorrichtung 10 mit einem teilweise geöffneten Abdeckelement 20. Durch Bewegen bzw. Verschieben des Abdeckelements 20 können die in diesem Fall zwei Ladebuchsen 16 in einer Lagerposition 18 im Innern des Gehäuses 12 freigelegt werden. Dadurch kann in die Ladebuchsen 16 in der Lagerposition 18 ein Ladestecker eingesteckt werden, wie durch die Pfeilrichtungen gekennzeichnet. Nach Beendigung des Ladevorgangs kann das Abdeckelement 20 wieder vor die beiden Ladebuchsen 16 verschoben werden. Wie durch die zwei Ausführungen der Figuren 2 (a) und 2 (b) gezeigt, kann das Abdeckelement 20 beispielsweise nach oben oder nach unten bewegt werden, um die Ladebuchsen 16 freizugeben. Dies ist lediglich beispielhaft, wobei ebenso ein Verschieben oder ein Bewegen des Abdeckelements nach rechts und links in der Darstellung möglich sein kann, wenn die Ladebuchsen 16 insbesondere an einer anderen Position angeordnet sind.

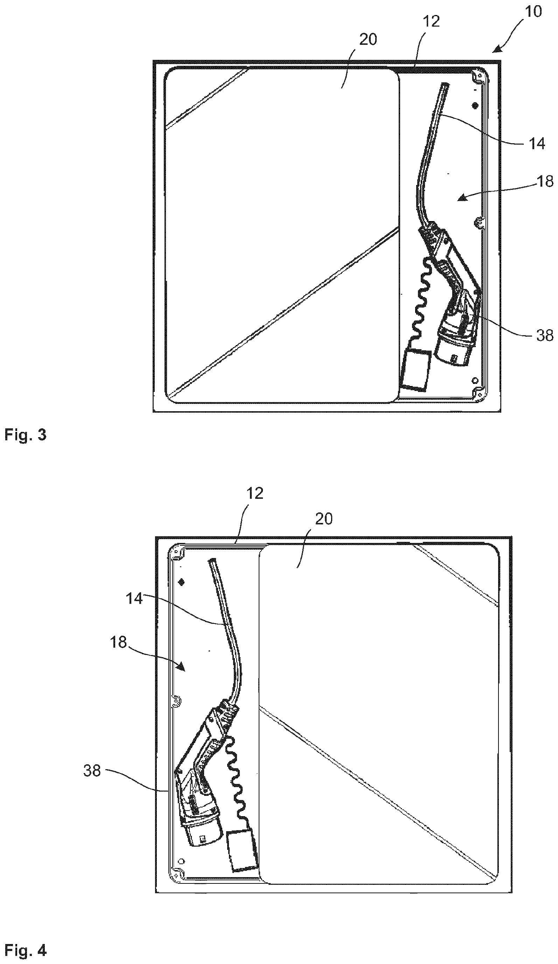

Fig. 3 und Fig. 4 zeigen weitere mögliche Ausführungsformen einer Anschlussvorrichtung mit einem teilweise geöffneten Abdeckelement 20. In einer derartigen Ausführungsform ist gezeigt, dass insbesondere auch ein Ladekabel 14 mit einem Steckerelement 38 in dem Gehäuse 12 gelagert werden kann. Dazu kann beispielsweise ein Fach, das eine Lagerposition 18 definiert, vorgesehen sein, um einen Bereich innerhalb des Gehäuses 12 zu begrenzen, in welchem das Ladekabel 14 gelagert werden soll. Des Weiteren können Halteelemente vorgesehen sein, um das Ladekabel 14 in einer gewünschten Position zu fixieren. So kann beispielsweise auch eine Art Kabeltrommel innerhalb des Gehäuses 12 integriert sein, um das Ladekabel 14 definiert innerhalb der Anschlussvorrichtung 10 aufzuwickeln.

Das Ladekabel 14 kann beispielsweise ein glattes Ladekabel sein. Des Weiteren kann das Ladekabel 14 spiralisiert ausgeführt sein. Die Halteelemente (in dieser darstellen nicht gezeigt) können entsprechend angepasst werden, um entsprechend geformte Ladekabel 14 zu lagern.

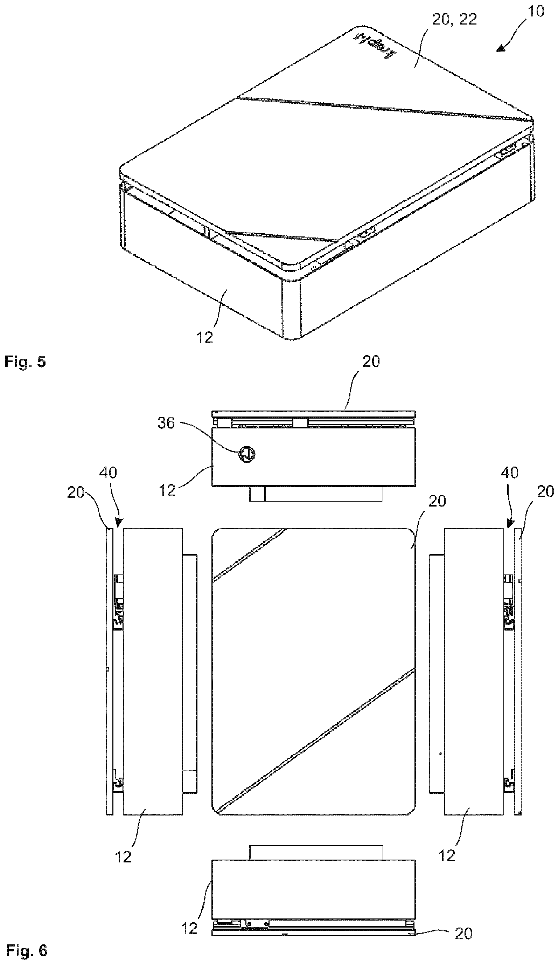

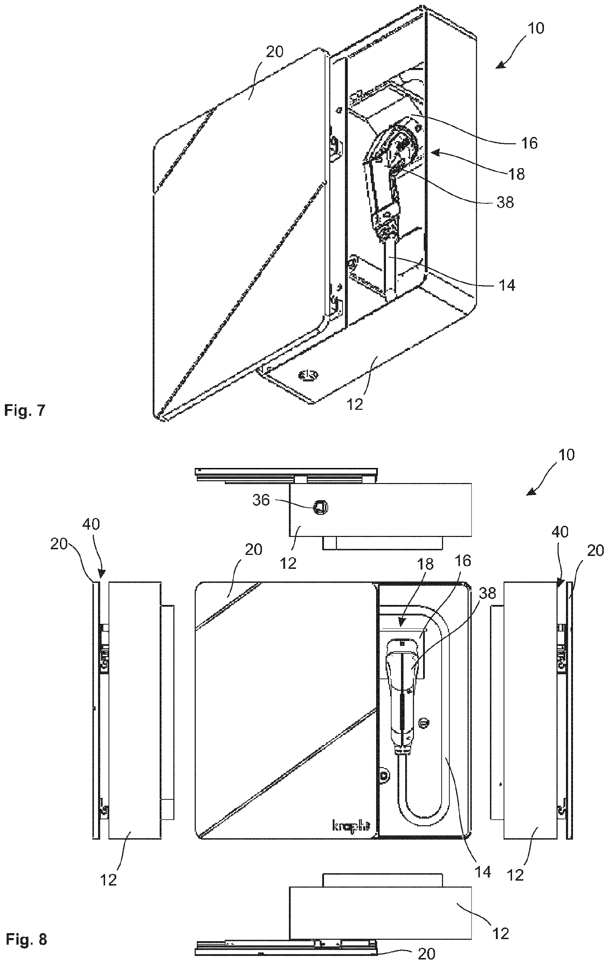

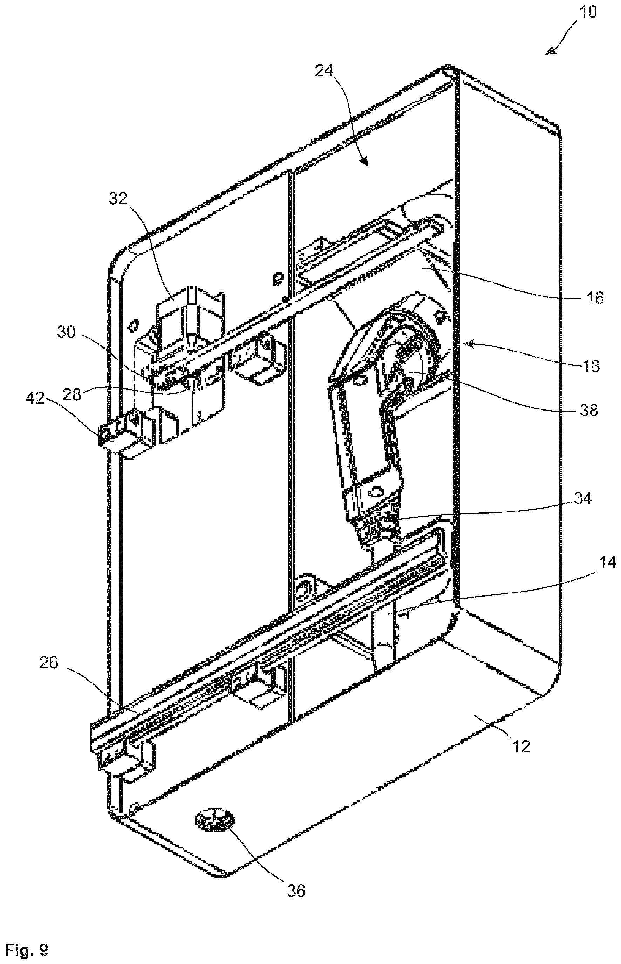

Fig. 5 zeigt eine mögliche Ausführungsform einer Anschlussvorrichtung 10 in einer isometrischen Darstellung und Fig. 6 zeigt die Ausführung nach Fig. 5 in unterschiedlichen Front- und Seitenansichten. Fig. 7 zeigt eine weitere mögliche Ausführungsform einer Anschlussvorrichtung 10 mit einem teilweise geöffneten Abdeckelement 20 und Fig. 8 zeigt die Ausführung nach Fig. 7 in unterschiedlichen Front- und Seitenansichten. In den Figu-ren 5 bis 8 ist eine Mechanik 40 erkennbar, die zwischen dem Abdeckelement 20 und dem Gehäuse 12 vorgesehen ist. Die Mechanik 40 kann unterschiedliche Mittel aufweisen, um ein Verschieben bzw. Bewegen des Abdeckelement 20 relativ zu dem Gehäuse 12 zu ermöglichen. So können beispielsweise die in den folgenden Figuren 9 bis 11 gezeigten Antriebselemente bzw. Führungselemente in der Mechanik 40 umfasst sein.

Fig. 8 zeigt weiterhin eine Nährungssensor 36, der an einer beliebigen Position, insbesondere an dem Gehäuse 12, angeordnet sein kann. Des Weiteren kann der Näherungssensor 36 ebenso an dem Abdeckelement 20 angeordnet sein. Der Näherungssensor 36 kann die Anwesenheit einer Person oder eines Fahrzeugs registrieren, wodurch automatisiert das Abdeckelement 20 geöffnet oder geschlossen werden kann.

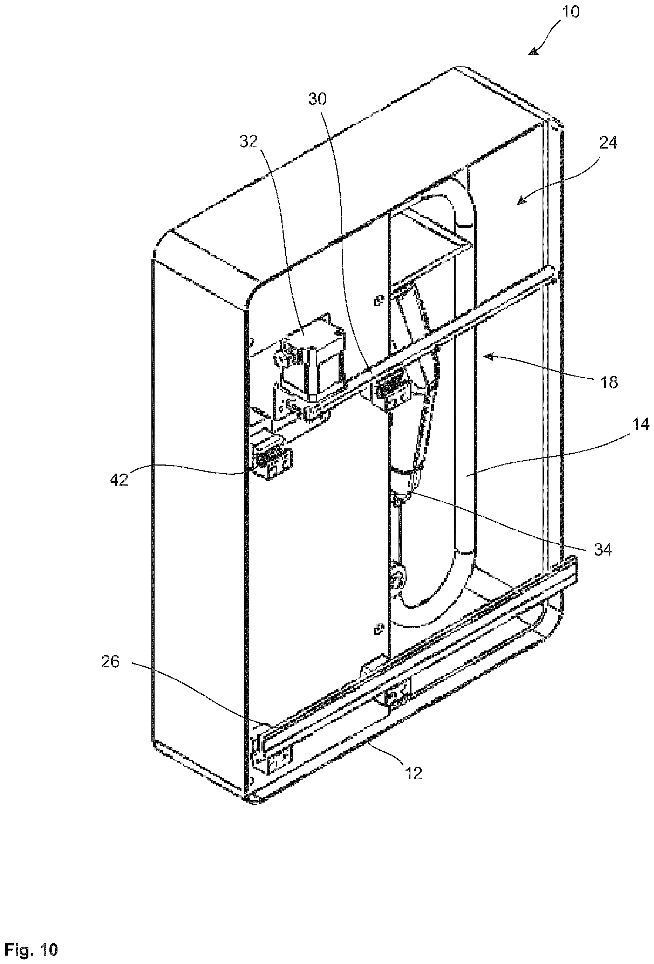

Die Figuren 9 und 10 zeigen eine weitere mögliche Ausführungsform einer Anschlussvorrichtung 10, wobei aus Gründen der Übersichtlichkeit das Abdeckelement 20 nicht gezeigt ist. Daher ist eine eispielhafte Ausführung einer Mechanik 40 erkennbar. In dieser Ausführungsform ist ein Schienenelement 26 vorgesehen, um das Abdeckelement 20 geführt an dem Gehäuse 12 zu bewegen. Der Antrieb erfolgt hierbei über eine Zahnstange 30 und zumindest ein Zahnradelement 28, wobei das Zahnradelement 28 über einen Elektromotor 32 angetrieben wird.

Die Ausführungsform zeigt weiterhin ein Fach 24, in welchem eine Ladebuchse 16 in einer Lagerposition 18 vorgesehen sein kann. Des Weiteren oder alternativ kann in dem Fach 24 ein Ladekabel 14 in der Lagerposition 18 mit einem Steckerelement 38 gelagert werden. Dazu können unterschiedliche Halteelemente 34 für eine temporären Befestigung des Ladekabels 14 oder des Steckerelements 38, z.B. Clipse, Kabelklemmen oder Rastfedern zur mechanischen Fixierung und Halterung vorgesehen sein, die hier nur beispielhaft und schematisch gezeigt sind.

In einer weiteren Ausführungsform kann das Gehäuse 12 eine Mehrzahl an Fächern 24 aufweisen, um beispielsweise mehrere Ladebuchsen 16 bzw. mehrere Ladekabel 14 in entsprechenden Lagerpositionen 18 darin zu lagern.

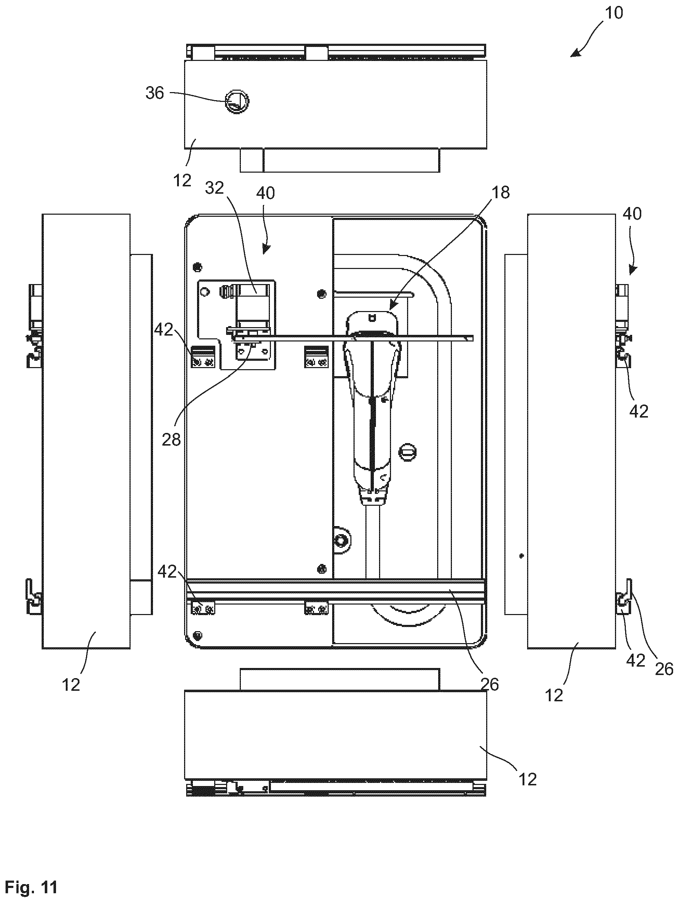

Fig. 11 zeigt die Ausführung nach Fig. 7 oder 8 in unterschiedlichen Front- und Seitenansichten. Das Schienenelement 26 sowie die Zahnstange 30 sind in dieser Ausführungsform parallel zueinander angeordnet. In einer weiteren Ausführungsform ist es ebenso denkbar, dass lediglich zwei Schienenelemente 26 vorgesehen sind, ohne einen Elektromotor und ohne Zahnradelement bzw. Zahnstange.

Der Antrieb des Abdeckelements 20 kann insbesondere auch pneumatische oder hydraulische erfolgen. Des Weiteren kann das Abdeckelement 20 dazu ausgelegt sein, händisch verschoben zu werden.

Der Antrieb, wie insbesondere der Elektromotor 32 mit weiteren Bestandteilen, kann benachbart zu einem Fach 24 in dem Gehäuse 12 vorgesehen sein.

Es ist ebenso denkbar, dass das Abdeckelement 20 parallel zu dem Gehäuse 12 verschwenkt wird, wobei das Abdeckelement 20 an einem Rotationspunkt an dem Gehäuse 12 gelagert sein kann. Insbesondere können das Abdeckelement 20 sowie das Gehäuse 12 dabei beliebige Geometrie in aufweisen. Des Weiteren können unterschiedlich große Anschlussvorrichtungen 10 umgesetzt werden, die beispielsweise einen Standfuß aufweisen können, oder auch an einer Wand angeordnet werden können. Durch das Abdeckelement 20, insbesondere ausgebildet als Dekorelement 22, kann sich die Anschlussvorrichtung 10 in die Umgebung einfügen, wobei diese als optisch nicht störend wahrgenommen wird.

### Bezugszeichenliste

- 10: Anschlussvorrichtung
- 12: Gehäuse
- 14: Ladekabel
- 16: Ladebuchse
- 18: Lagerposition
- 20: Abdeckelement
- 22: Dekorelement
- 24: Fach
- 26: Schienenelement
- 28: Zahnradelement
- 30: Zahnstange
- 32: Elektromotor
- 34: Halteelement
- 36: Näherungssensor
- 38: Ladestecker
- 40: Mechanik
- 42: Lagerelement

## Patentansprüche

1. Anschlussvorrichtung (10) für Elektrofahrzeuge oder Hybridfahrzeuge, umfassend ein Gehäuse (12), insbesondere zumindest ein Ladekabel (14) und/oder insbesondere zumindest eine Ladebuchse (16), **dadurch gekennzeichnet, dass** das Ladekabel (14) und/oder die Ladebuchse (16) in einer Lagerposition (18) derart in dem Gehäuse (12) angeordnet sind bzw. anordenbar sind, dass das Ladekabel (14) und/oder die Ladebuchse (16) von außerhalb des Gehäuses (12) nicht sichtbar sind.

2. Anschlussvorrichtung (10) nach Anspruch 1, **dadurch gekennzeichnet, dass** die Lagerposition (18) einen Zustand darstellt, in welchem das Ladekabel (14) und/oder die Ladebuchse (16) nicht zum Laden eines Elektrofahrzeugs oder Hybridfahrzeugs genutzt werden.

3. Anschlussvorrichtung (10) nach einem der vorhergehenden Ansprüche, **dadurch gekennzeichnet, dass** das Gehäuse (12) ein Abdeckelement (20) aufweist, hinter welchem das Ladekabel (14) und/oder die Ladebuchse (16) in der Lagerposition (18) gelagert sind bzw. lagerbar sind.

4. Anschlussvorrichtung (10) nach Anspruch 3, **dadurch gekennzeichnet, dass** das Abdeckelement (20) verschwenkbar und/oder verschiebbar an dem Gehäuse (12) gelagert ist.

5. Anschlussvorrichtung (10) nach einem der Ansprüche 3 oder 4, **dadurch gekennzeichnet, dass** das Abdeckelement (20) parallel zu dem Gehäuse (12) verschiebbar und/oder verschwenkbar ist.

6. Anschlussvorrichtung (10) nach einem der Ansprüche 3 bis 5, **dadurch gekennzeichnet, dass** das Abdeckelement (20) eine Seitenfläche des Gehäuses (12) im Wesentlichen abdeckt oder dass das Abdeckelement (20) eine Seitenfläche des Gehäuses (12) ausbildet.

7. Anschlussvorrichtung (10) nach einem der Ansprüche 3 bis 6, **dadurch gekennzeichnet, dass** das Abdeckelement (20) als Dekorelement (22) ausgebildet ist, insbesondere als Stein- oder Keramikplatte, bevorzugt als Marmorplatte.

8. Anschlussvorrichtung (10) nach einem der vorhergehenden Ansprüche, **dadurch gekennzeichnet, dass** in dem Gehäuse (12) zumindest zwei, insbesondere mehrere Fächer (24) ausgeformt sind, wobei insbesondere in einem Fach (24) das Ladekabel (14) gelagert ist bzw. lagerbar ist.

9. Anschlussvorrichtung (10) nach einem der Ansprüche 3 bis 8, **dadurch gekennzeichnet, dass** das Abdeckelement (20) über zumindest ein Schienenelement (26) an dem Gehäuse (12) geführt verschieblich gelagert ist.

10. Anschlussvorrichtung (10) nach Anspruch 9, **dadurch gekennzeichnet, dass** zumindest zwei parallele Schienenelemente (26) vorgesehen sind, um das Abdeckelement (20) parallel zu dem Gehäuse (12) zu verschieben.

11. Anschlussvorrichtung (10) nach einem der Ansprüche 3 bis 10, **dadurch gekennzeichnet, dass** das Abdeckelement (20) über zumindest ein Zahnradelement (28) und zumindest eine Zahnstange (30) an dem Gehäuse (12) vorzugsweise motorisch antreibbar gelagert ist.

12. Anschlussvorrichtung (10) nach einem der Ansprüche 3 bis 11, **dadurch gekennzeichnet, dass** zumindest ein Elektromotor (32) vorgesehen ist, um das Abdeckelement (20) relativ zu dem Gehäuse (12) zu verschieben.

13. Anschlussvorrichtung (10) nach einem der Ansprüche 3 bis 12, **dadurch gekennzeichnet, dass** das Ladekabel (14) über zumindest ein lösbares Halteelement (34) in dem Gehäuse (12) gehalten ist.

14. Anschlussvorrichtung (10) nach einem der der Ansprüche 3 bis 13, **dadurch gekennzeichnet, dass** ein Näherungssensor (36) vorgesehen ist, um ein Öffnen und/oder Schließen des Abdeckelements (20) auszulösen.
